# EUROPÄISCHE PATENTSCHRIFT

(11) **EP 3 870 418 B1**
(45) Veröffentlichungstag und Bekanntmachung des Hinweises auf die Patenterteilung: **10.12.2025**
(21) Anmeldenummer: 19821242.5
(22) Anmeldetag: 21.10.2019
(51) Int. Cl.: B29B 13/06, B29C 48/285, F26B 3/06, F26B 17/12, B29B 7/82, B29B 9/16, B29B 7/66, B29B 13/02, B29C 48/793, B29B 7/60

(54) **VERFAHREN UND VORRICHTUNG ZUR SCHNELLEN UND EFFIZIENTEN ERWÄRMUNG VON KUNSTSTOFFGRANULATEN ZUR VORBEREITUNG FÜR DIE VERARBEITUNG IN EINER PLASTIFIZIERUNG**
METHOD AND DEVICE FOR THE FAST AND EFFICIENT HEATING OF PLASTIC GRANULATES FOR PREPARING FOR THE PROCESSING IN A PLASTICIZATION
PROCÉDÉ ET DISPOSITIF SERVANT À RÉCHAUFFER DE MANIÈRE RAPIDE ET EFFICACE DES GRANULATS DE MATIÈRE PLASTIQUE AUX FINS DE LA PRÉPARATION EN VUE DE LA TRANSFORMATION LORS D'UNE PLASTIFICATION

(30) Priorität: 24.10.2018 DE 102018008445; 13.02.2019 DE 102019103603
(43) Veröffentlichungstag der Anmeldung: 01.09.2021
(73) Patentinhaber: Bock, Stefan, 8750 Glarus (CH)
(72) Erfinder: Bock, Stefan, 8750 Glarus (CH)
(74) Vertreter: Klickow & Wetzel PartGmbB
(86) Internationale Anmeldenummer: PCT/DE2019/000283
(87) Internationale Veröffentlichungsnummer: WO 2020/083421

(56) Entgegenhaltungen:
- EP-A1- 0 719 996
- DE-A1- 102010 024 917
- DE-B2- 2 140 265
- US-A- 1 538 192
- US-A- 1 702 311
- US-A- 2 060 581
- US-A- 2 469 424
- US-A- 2 766 534
- US-A- 271 604
- US-A- 4 045 882

## Beschreibung

Die Erfindung betrifft ein Verfahren gemäß Anspruch 1 zur Erwärmung und Trocknung von Kunststoffgranulaten, die für den folgenden Plastifizierprozess vorbereitet werden.

Die Erfindung betrifft darüber hinaus eine Vorrichtung gemäß Anspruch 7 zur Erwärmung und Trocknung von Kunststoffgranulaten, die für den folgenden Plastifizierprozess vorbereitet werden.

Im Besonderen erfolgt eine Anwendung für Kunststoffgranulate, die hygroskopisch sind und daher getrocknet werden müssen, um eine Degradierung des Materials während des Plastifizierprozesses zu vermeiden. Dabei wird dem Material zudem Wärmeenergie zugeführt, die den Plastifizierprozess signifikant unterstützt: der Plastifizierprozess wird stabiler, da die Plastifizierung dem Kunststoffmaterial weniger Energie zum Aufschmelzen zuführen muss.

Der Trocknungsvorgang für Kunststoffgranulat ist gemäß dem Stand der Technik bereits sehr ausgereift. In einem Trockentrichter, in dem das Material für den Plastifiziervorgang bereitgestellt wird, wird im Gegenstrom ausreichend trockene Luft eingespeist, die die überschüssige Feuchtigkeit kontrolliert aufnimmt.

Bei dem gleichzeitigen Eintrag von Wärmeenergie sieht es im Stand der Technik anders aus, da diesem Vorgang nicht immer ausreichend Beachtung geschenkt wird. Grund dafür ist, dass die Messung des Energieeintrages recht anspruchsvoll ist. Zwar stört dieser Umstand nicht in dem Maße den Produktionsprozess, wie es bei zu hoher Feuchtigkeit der Fall wäre, jedoch wird der Energieverbrauch signifikant beeinflusst.

Neben dem Trockentrichter, der auch als Einstufentrocknung bekannt ist, gibt es auch bereits die zweistufige Trocknung, die häufig gerne aus Platzgründen eingesetzt wird: Bei der einstufigen Trocknung sitzt der Trockentrichter direkt über der Plastifizierung einer Spritzgießmaschine oder eines Extruders. Häufig ist der Aufbau dadurch so hoch, dass er nicht in alle Fabrikhallen hineinpasst. Hier hilft man sich, indem der Trockentrichter neben die Maschine gestellt wird und das Material dann in einen kleineren Trichter, auch Booster genannt, direkt über der Maschine gefördert wird.

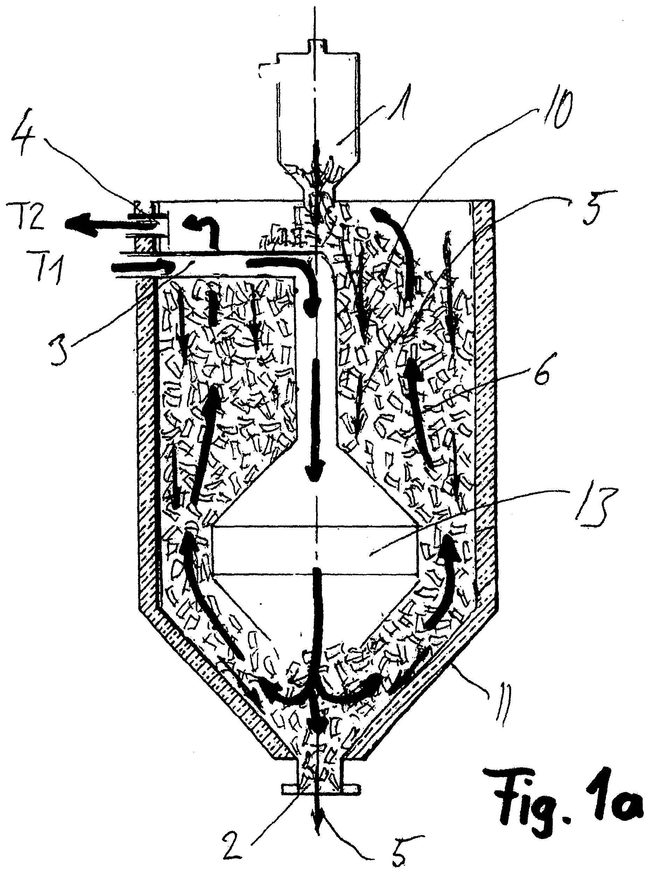

In FIG 1a ist eine bereits bekannte Bauart eines Trocken-/Boostertrichters dargestellt. Der Unterschied zwischen einem Trockentrichter und einem Booster liegt vor allem darin, dass im Trockentrichter das Schüttgut durch den Durchfluss von warmer, trockner Luft aktiv auf eine Restfeuchte von ca. 20-50 ppm getrocknet und auf eine Temperatur zum Beispiel von ca. 180 °C erhitzt wird. Dazu muss die Luft jedoch nach jeder Durchströmung des Schüttgutes wieder auf ca. 50-60 °C gekühlt werden, um selbst wieder mittels Trockenmittel zu trocknen, um dann wieder aufgeheizt zu werden.

Durch das Herunterkühlen der Luft wird viel Energie vergeudet. So liegt es nahe, den Trocknungsvorgang bei einem tieferen Temperaturniveau wie beispielsweise 120 °C durchzuführen, um auf die anschließende Abkühlung der Prozessluft verzichten zu können. Für den Trocknungsvorgang wäre das kein Problem, doch würde dem Schüttgut dann zu wenig Wärmeenergie für den darauffolgenden Aufschmelzprozess zugeführt werden. Ein anderer Vorteil dieser Vorgehensweise ist, dass mit dieser tieferen Temperatur in dem vergleichsweise großen Trockentrichter bei sehr hohen Verweilzeiten von 5-8 Stunden das Material deutlich weniger Schädigungen erfährt. Bei der Verarbeitung von Rezyklaten entstehen zudem bei höheren Temperaturen Kondensate, die den Trockner kontaminieren und abgeschieden werden müssen. Generell werden Rezyklate daher eher bei niedrigeren Temperaturen wie z. B. 160 °C getrocknet.

Die Aufgabe eines weiteren Eintrags von Wärmeenergie kann dann eine weitere Heizeinrichtung, der Booster, übernehmen. Die heutigen Booster dienen jedoch fast ausschließlich dazu, die eingetragene Wärmeenergie vom Trockenprozess zu erhalten, bzw. marginal zu erhöhen. Diese heute auf dem Markt erhältlichen klassischen Booster haben ihre Limits. Grundsätzlich sollte ein Booster nur relativ kleine Materialmengen aufnehmen, die beispielsweise für 20-40 min Produktionszeit ausreichen, da viele Kunststoffe, so auch das Polyethylenterephthalat (PET), bei hohen Temperaturen degradieren. In diesen 20-40 min sollte das Kunststoffgranulat ähnlich wie beim Trockner mit einem Gegenstrom von erhitzter Luft weitere Energie aufnehmen.

Während beim Trockner, wie erwähnt, die Prozess-Rückluft heruntergekühlt wird, um eine gute Trocknung der Luft in den Trockenpatronen mit Trockenmitteln zu gewährleisten und um auch das Gebläse zu schonen, kann der Booster dagegen mit einem deutlich höheren Temperaturniveau umgehen. Die Prozessluft wird im ständigen Kreislauf im Booster durch das Kunststroffgranulat geschickt, ohne dass es zur Trocknung abgekühlt werden müsste. Dies bedeutet, dass die Luftdichte entsprechend geringer ist und für den Transport der Wärmeenergie ein deutlich größeres Luftvolumen benötigt wird.

Da die Prozessluft und damit die Wärmeenergie gemäß Stand der Technik FIG 1a gegen den Strom des Schüttgutes eingeleitet wird, kommt der Wärmeeintragsprozess bei großen Luftmengen schnell an seine Grenzen, da das Kunststoffgranulat anfängt, in der Luft zu schwimmen und somit nicht mehr zur Plastifizierung abfließen kann, eine kontinuierliche und ausreichende Materialversorgung ist nicht mehr gewährleistet. Da die Durchflussgeschwindigkeit dieser Prozessluft jedoch eine Funktion der Energieeintragsgeschwindigkeit in das Granulat ist, müssen heute die Booster derartig groß gebaut werden, um die fehlende Energieeintragsgeschwindigkeit mit einer entsprechenden Verweilzeit im Boostertrichter zu kompensieren. Die erhöhte Verweilzeit bedeutet aber wieder eine direkte Gefahr für das Material, dass es degradiert.

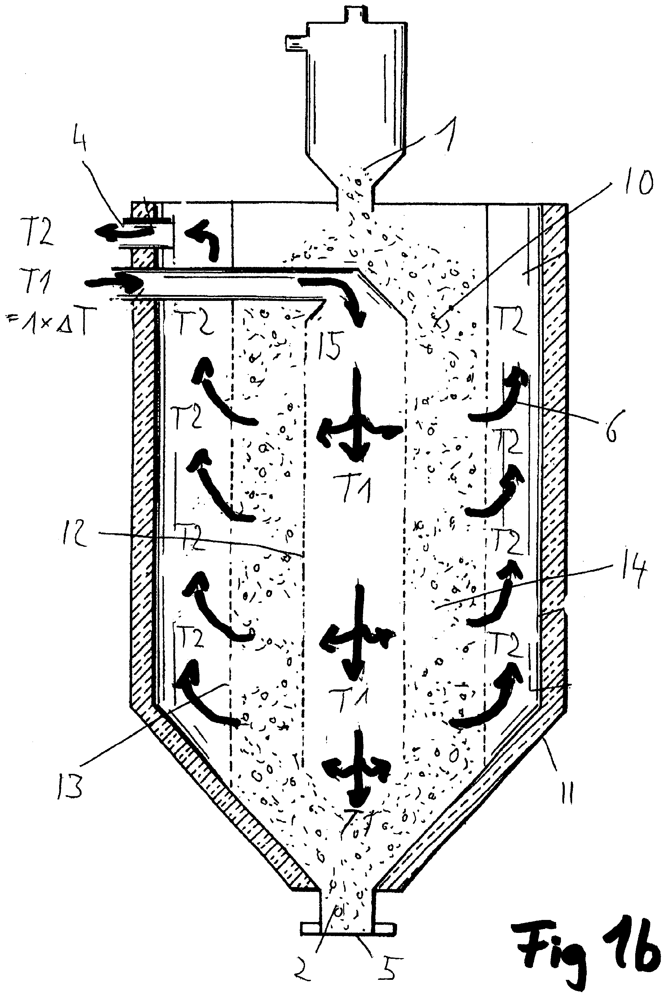

Dieses Problem wurde bereits in der DE 0000 19840358 A1 erkannt. Um den notwendigen Energiebedarf dem Schüttgut zuzuführen, wird hier beschrieben, dass die heiße Prozessluft in der Längsachse im Kern des Boostertrichters durch ein Rohr eingeblasen wird (FIG 1b). Das über die gesamte Länge perforierte innere Rohr erlaubt dieser Luft, nun waagerecht durch das Kunststoffgranulat zu gelangen, ohne dabei seiner Fließrichtung entgegenzuwirken. Ein äußeres Rohr, das für das Kunststoffgranulat einen Ringkanal bildet, ist ebenfalls perforiert. Hier kann die Luft wieder aus dem Kunststoffgranulat austreten, um den Boostertrichter zu verlassen. Mit dieser Lösung ist es möglich, den Strom der Prozessluft und damit dessen Geschwindigkeit deutlich zu erhöhen, ohne dass der Granulatstrom in seiner Fließrichtung negativ beeinflusst wird.

Der Nachteil dieser Lösung liegt darin, dass die heisse Luft unkontrolliert über die Trichterachse dem Material zugeführt wird. Das bedeutet, dass das gesamte Material, auch das, welches gerade in den Boostertrichter gelangt, unnötigerweise mit der gleichen maximal beheizten Luft beschickt wird, wie das Material, welches kurz davor ist, aus dem Booster in die Plastifizierung zu gelangen. Versuche haben gezeigt, dass die Luft sogar bevorzugt im oberen Bereich durch das Material fliesst, da dort der Widerstand am geringsten ist. Das Material am Austritt sollte jedoch bevorzugt mit der heißesten Luft beschickt werden, um den maximalen Energieinhalt im Kunststoffgranulat bei geringster Verweilzeit vor dem Plastifizieren zu erreichen und damit jegliche Schädigung durch hohe Temperaturen bei längerer Einwirkdauer zu vermeiden.

Darüber hinaus bietet der Ringkanal der Prozessluft eine vergleichsweise kurze Durchströmungsstrecke durch das Kunststoffgranulat an, welche eine effiziente Abgabe von Wärmeenergie an das Schüttgut nicht erlaubt. Daraus ergibt sich, dass die Luft nicht nur völlig diffus und unkontrolliert die Wärmeenergie an das Schüttgut abgibt, sondern wegen des kurzen Weges durch das Kunststoffgranulat sehr inneffizient die Wärmeenergie in das Schüttgut transportiert. Die Prozessluft verlässt den Boostertrichter somit wieder mit einem hohen Temperaturniveau. Die Temperaturen der Ausgangsluft deutlich über 140 °C sind für normale Gebläse zu hoch, so dass diese Schaden nehmen. Es müssen teure Spezialgebläse zum Einsatz kommen, die heute kaum existieren.

Wird nun zur Unterstützung der Plastifizierung die Möglichkeit genutzt das Granulat über die übliche Temperatur von 180 °C zu heizen, wie z. B. auf 220 °C dann wäre die Lösung, wie in DE 0000 19840358 A1 beschrieben, ungeeignet, da das Material den hohen Temperaturen zu lange ausgesetzt wäre und das Gebläse einer thermischen Überlast ausgesetzt wäre.

Aus der US 2766534 A ist bereits ein Verfahren zum Trocknen eines Kunststoffgranulates bekannt. Die Trocknung erfolgt durch die Einbringung eines heissen Gases. Das heiße Gas durchfliesst das Kunststoffgranulat mehrfach.

Aus der DE 10 2010 027 917 A1 ist ein Verfahren zum Trocknen eines fliessfähigen Schüttgutes bekannt. Es wird hierbei ein heißes Gas durch das Schüttgut geleitet. Eine Zuführung des heißen Gases erfolgt unter Verwendung von Rohren, die mit Strömungsöffnungen in ihren Mänteln versehen sind.

Die vorliegende Erfindung wird nachfolgend anhand von Ausführungsbeispielen genauer erläutert. In den Zeichnungen zeigen:
- Fig. 1a: Boostertrichter gemäß dem Stand der Technik,
- Fig. 1b: Boostertrichter gemäß der DE 0000 19840358 A1,
- Fig. 2: Boostertrichter, der in Kaskaden die Prozessluft mehrfach durch das Kunststoffgranulat leitet,
- Fig. 3: Boostertrichter, der in entgegengesetzter Richtung in Kaskaden die Prozessluft mehrfach durch das Kunststoffgranulat leitet und nicht zum Umfang der beanspruchten Erfindung gehört,
- Fig. 4: Boostertrichter, der über Kaskaden unterschiedlicher Länge verfügt, die die Prozessluft mehrfach durch das Kunststoffgranulat leitet, wobei der Weg durch das Granulat stufenweise variiert wird, um ggf. den Widerstand zu kompensieren,
- Fig. 5: Boostertrichter, der über Kaskaden unterschiedlicher Länge verfügt, die die Prozessluft mehrfach durch das Kunststoffgranulat leiten, wobei der Weg durch das Granulat graduell variiert wird, um den Widerstand zu kompensieren.

Die Zeichnungen sollen im Folgenden die Erklärung des Trocknungs- oder Erhitzungsvorganges des Kunststoffgranulates direkt vor dem Plastifizierungsvorgang unterstützen.

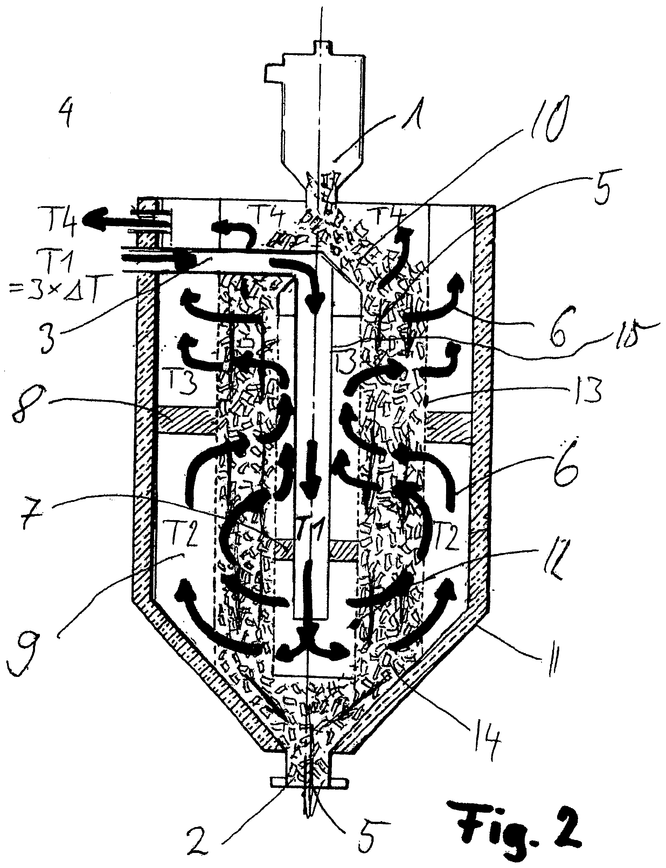

Im Gegensatz zu dem im Stand der Technik beschriebenen Verfahren und der entsprechenden Vorrichtung, beschreibt die Erfindung eine Lösung gemäß den FIG. 2, Fig. 4 und FIG. 5, in der die heiße und trockene Prozessluft mit einer Temperatur T1 gezielt im Bereich des Kunststoffgranulatauslasses zur Plastifizierung 2 des Boostertrichters 11 durch das Rohr 3 eingeblasen wird. Auch hier wird das Schüttgut 10 in einem Ringkanal 14, gebildet aus einem perforierten Innenmantel 12 und einem perforierten Außenmantel 13 gespeichert. Die Strömungsrichtung der heißen und trockenen Prozessluft 6 entgegnet damit nicht frontal der Fließrichtung des Kunststoffgranulates 5 und behindert es dabei, zur Plastifizierung gleichmäßig abzufließen. Dies hat sich in dem beschriebenen DE000019840358A1 bewährt. Jedoch wird bei dieser Erfindung durch die innere Prozessluftbarriere 7 die Prozessluft daran gehindert, in den oberen Trichterbereich zu gelangen, sondern sie wird gezwungen im Bereich des Kunststoffgranulatauslasses 2 mit vollem Energiegehalt bei maximaler Temperatur in das Material kurz vor der Plastifizierung einzudringen, um dort bei geringster Verweilzeit die optimale Wärmemenge zu übertragen.

Danach geht die Prozessluft in die erste äußere ringförmigen Kaskade 9, wo sie von der äußeren Prozessluftbarriere 8 gehindert wird, den Trichter 11 durch den Prozessluftauslass 4 zu entweichen. So ist die Prozessluft abermals gezwungen, durch den perforierten Außenmantel 13 in das Kunststoffgranulat 10 zu dringen, um dann wieder durch den perforierten Innenmantel 12 im inneren Luftkanal 15, der auch eine Kaskade bildet, zu gelangen.

Die Prozessluft hat dabei längst nicht mehr die Trichtereingangstemperatur, sie liegt je nach Energieabgabe vom ersten Durchfluss durch das Material signifikant tiefer. So ist diese Temperatur T2 dann auch schon weniger kritisch für das Material, was die Degradation anbelangt. Temperatur und Verweilzeit stehen im direkten Zusammenhang mit der Degradation - je höher die Temperatur, desto geringer muss die Verweilzeit gehalten werden. Dennoch ist beim zweiten Durchfluss ausreichend Energie vorhanden, um das zu durchströmende Granulat weiter zu erwärmen, ohne es auf den kritischsten, thermischen Endzustand zu bringen.

Der innere Luftkanal 15 leitet die Luft weiter höher im Trichter 11, wo sie ein drittes Mal gezwungen wird, mit einer Temperatur T3 durch den perforierten Innenmantel 12 in das Kunststoffgranulat 10 zu dringen. Da das Kunststoffgranulat 10 im oberen Trichterniveau durch diese Konstruktion bisher kaum Energie aufnehmen konnte, kann die Prozessluft hier ebenfalls effizient Wärmeenergie abgeben um dann durch den perforierten Außenmantel 13 über den Prozessluftauslass 4 mit einer Temperatur T4 aus dem Trichter 11 zu gelangen. Von dort wird die nun in den hier beschriebenen drei Stufen mit Temperaturdifferenzen ΔT abgekühlte Luft im geschlossenen Kreislauf mit einem Gebläse durch eine Heizung geblasen, um dann wieder über den Prozesslufteinlass 3 in den Trichter 11 zu gelangen.

Hier ist beschrieben, dass die Prozessluft drei Mal das Kunststoffgranulat durchwandert, was sich bewährt hat. Jedoch ist eine nur zweimalige Durchdringung oder, solange sinnvoll, eine mehrfache Durchdringung nach dem gleichen Prinzip möglich, sofern der immer größere Gegendruck und die Platzverhältnisse beachtet werden.

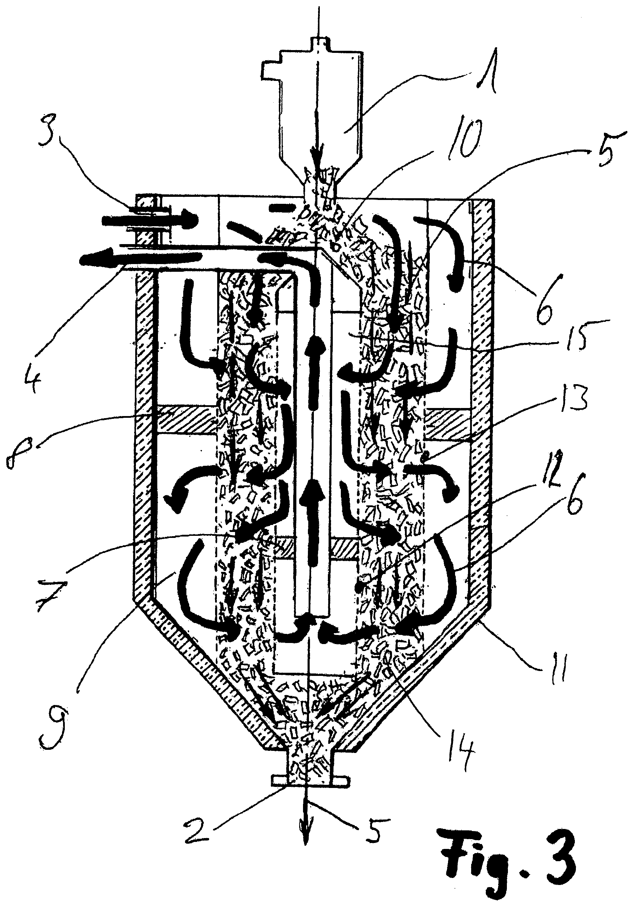

Natürlich kann, wie in FIG.3 gezeigt die Prozessluft auch gegensinnig eingeblasen werden, was aber für den Anspruch des anschließenden Plastifizierens nicht die gleiche Effizienz haben kann und nicht zum Umfang der beanspruchten Erfindung gehört.

In Ausnahmen kann es abhängig von der Art des Kunststoffgranulates Sinn machen, dass die Prozessluft von oben nach unten durch das Kunststoffgranulat im Boostertrichter geleitet wird.

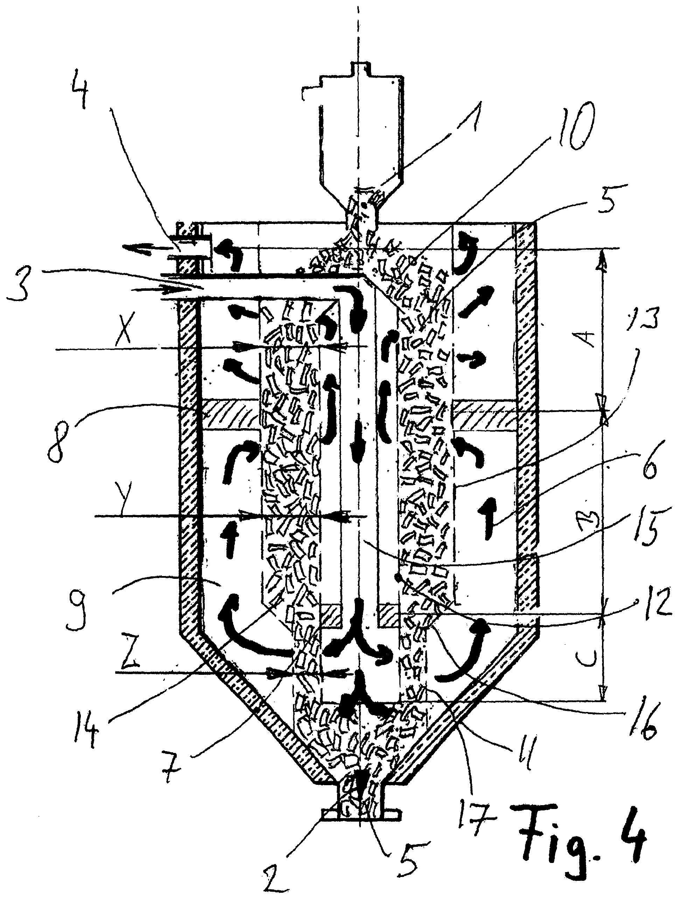

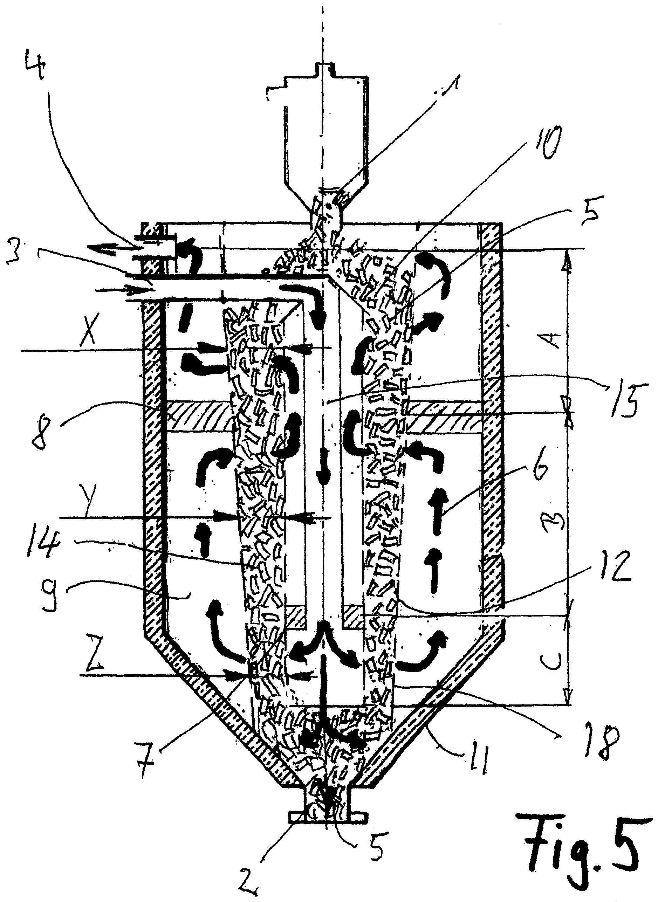

Generell können die Kaskaden 9 auch unterschiedlich lang gestaltet werden, um die Geschwindigkeit der Prozessluft zu beeinflussen. (Beispiel FIG.4 und FIG.5) Länge A ist ungleich Länge B ist ungleich Länge C. So kann es kurz vor dem Granulatauslass 2 in die Plastifizierung sinnvoll sein, die Prozessluft im heißesten Zustand bei sehr hoher Geschwindigkeit durch das Granulat zu blasen, in dem der Kaskadenraum möglichst kurzgehalten wird und damit auch die Verweilzeit des Granulates bei den extrem hohen Temperaturen von beispielsweise 220 °C möglichst kurz zu halten. Ist die Luft in den folgenden Kaskaden 9 dann bereits kühler, kann die Kaskade entsprechend grösser (länger) gestaltet werden. Dies trägt der physikalischen Tatsache Rechnung, dass sehr heisse Prozessluft bei sehr hoher Geschwindigkeit in sehr kurzer Zeit viel Energie an das Schüttgut abgeben kann und es in wenigen Minuten durchgeheizt ist. Dadurch kann eine relativ geringe Materialmenge kurz vor dem Plastifizierungsprozess effizient aufgeheizt werden, da dem Material dann keine Zeit bleibt, bei dem hohen Temperaturniveau zu degradieren. Je höher das Energieniveau vor dem Plastifizieren, desto stabiler und energiesparender ist der nachfolgende Plastifizierungsprozess.

Werden nur die Längen der Kaskaden unterschiedlich verändert, führt dies zu verschiedenen Widerständen für die Prozessluft. Die kleinste Kaskade würde damit den Gesamtdurchsatz pro Zeiteinheit der Prozessluft bestimmen. Ist diese aus bestimmten Gründen zu gering, kann dies mit der Weite des Ringkanals X, Y, Z kompensiert werden.

FIG. 4 und FIG 5 zeigen den Ringkanal 14 mit verschiedenen Wandstärken X ist ungleich Y ist ungleich Z. Das kann erzeugt werden, in dem idealerweise der perforierte Ausenmantel 13 an den Prozessluftbarrieren 7 und 8 einen Durchmessersprung macht, der bevorzugt konisch in Fließrichtung ausgeführt wird. Natürlich kann das auch mit dem perforierten Innenmantel 12 oder mit beiden Mänteln ausgeführt werden. Einer der perforierten Mäntel oder beide können auch konisch gestaltet werden, so dass der Ringkanal 14 graduell kleiner wird. Das hätte auch den Vorteil, dass die Prozessluft bevorzugt direkt an den Barrieren 8 im letzten Moment in das Schüttgut 10 strömt.

Als Prozessluft für die Behandlung des Kunststoffgranulats wird bevorzugt getrocknete Luft verwendet. Besonders bevorzugt ist die Verwendung von getrockneter und beheizter Luft.

Die Einleitung der Prozessluft erfolgt bevorzugt innerhalb von wenigen Minuten. Besonders bevorzugt ist die Einleitung der Prozessluft an einem frei wählbaren Ort.

### Bezugszeichenliste

- 1: Kunststoffgranulatförderung
- 2: Kunststoffgranulatauslass zur Plastifizierung
- 3: Prozesslufteinlass (Prozessluft heiß und trocken)
- 4: Prozessluftauslass
- 5: Fließrichtung des Kunststoffgranulates
- 6: Fließrichtung der Prozessluft
- 7: Prozessluftbarriere Innen
- 8: Prozessluftbarriere Außen
- 9: Kaskade Prozessluftströmung in Ringform
- 10: Kunststoffgranulat
- 11: Trocken bzw. Boostertrichter
- 12: Perforierter Innenmantel
- 13: Perforierter Außenmantel (bildet mit Innenmantel einen Ringkanal)
- 14: Ringkanal für Kunststoffgranulat
- 15: Innerer Luftkanal
- 16: Konische Verengung des Ringkanals
- 17: Engerer Ringkanal
- 18: Konisch verlaufender perforierter Außenmantel

## Patentansprüche

1. Verfahren zum Heizen und/oder Trocknen von Kunststoffgranulat (10), bei dem das Kunststoffgranulat (10) zu einer Verarbeitungseinheit gefördert wird, die eine Plastifizierung durchführt, wobei Prozessluft zur Einbringung von Wärmeenergie nicht im direkten Gegenstrom in den Kunststoffgranulatfluss eingeleitet wird, die Prozessluft in ihrem noch heißesten Zustand gezielt zum schnellen Energieeintrag am Materialausgang (2) eines Booster Trichters (11) eingeleitet wird und dann durch in der Länge variabel gestaltbare Kaskaden (9) und durch bevorzugt in ihrer Weite variabel gestaltbare Ringkanäle (14) das Kunststoffgranulat (10) mindestens zweimal durchfließt, wobei der Widerstand der kontinuierlich fließenden Prozessluft in jeder Kaskade (9) konstruktiv beeinflussbar ist und damit der Gesamtstrom und die Geschwindigkeit der Prozessluft beeinflusst wird, wobei in den ersten Strömungsraum wenigstens ein Prozesslufteinlass (3) mündet und damit dort das Temperaturniveau am höchsten ist.

2. Verfahren nach Anspruch 1, **dadurch gekennzeichnet, dass** die heiße Prozessluft in einem geschlossenen Kreislauf geleitet wird.

3. Verfahren nach Anspruch 1 und 2, **dadurch gekennzeichnet, dass** die heiße Prozessluft vor dem Durchströmen des Kunststoffgranulates (10) aufgeheizt wird.

4. Verfahren nach Anspruch 1 bis 3, **dadurch gekennzeichnet, dass** beim mehrmaligen Durchströmen der heißen Prozessluft durch das Kunststoffgranulat (10) jedes Mal Wärmeenergie abgegeben wird und die Prozessluft eine entsprechende Abkühlung erfährt.

5. Verfahren nach Anspruch 1 bis 4, **dadurch gekennzeichnet, dass** das Aufheizungsverfahren unmittelbar vor der Weiterverarbeitung des Kunststoffgranulats (10) in einer Plastifizierung stattfindet.

6. Verfahren nach dem Anspruch 1 bis 5, **dadurch gekennzeichnet, dass** nur das Kunststoffgranulat (10), das direkt vor der Verarbeitung steht, insbesondere 20 - 33 % des Trichtervolumens, mit der einströmenden, heißen Prozessluft beschickt wird und damit bevorzugt prozessunübliche Temperaturen zum Einsatz kommen können, bevorzugt 220 °C.

7. Vorrichtung zur Aufheizung und Trocknung von Kunststoffgranulat (10), zur Durchführung des Verfahrens nach Anspruch 1, mit wenigstens einer Heizung, wobei eine Heizeinrichtung wenigstens einen Fließraum (14) für das Kunststoffgranulat (10) aufweist, der nicht im direkten Gegenstrom zum Prozessluftstrom steht und dieser Prozessluftstrom das Kunststoffgranulat (100) mindestens zweimal zur Abgabe von Wärmeenergie durch Kaskaden (9) durchströmt, wobei die Kaskaden (9) bevorzugt individuelle Längen und bevorzugt Ringkanalkammern (9) zur Beeinflussung des Strömungswiderstandes der Prozessluft aufweisen und damit durch die hohe Strömungsgeschwindigkeit und kurze Verweilzeit in der ersten Kaskade bevorzugt höhere Temperaturen zum Einsatz kommen, insbesondere 220 °C, ohne dass das Kunststoffgranulat (10) Schaden davonträgt, wobei in den ersten Strömungsraum wenigstens ein Prozesslufteinlass (3) mündet und damit dort das Temperaturniveau am höchsten ist

8. Vorrichtung nach Anspruch 7, mit wenigstens einer Heizung **dadurch gekennzeichnet, dass** der Fließraum (14) von wenigstens eines perforierten Außenmantels (13) begrenzt ist, die wenigstens eine Durchlassöffnung für die Prozessluft aufweist.

9. Vorrichtung nach Anspruch 7 bis 8, **dadurch gekennzeichnet, dass** der Fließraum (14) von zwei koaxialen Rohren (12, 13) begrenzt ist, von denen wenigstens ein Rohr, vorzugsweise beide Rohre, wenigstens eine Durchlassöffnung für die Prozessluft aufweist.

10. Vorrichtung nach Anspruch 9, **dadurch gekennzeichnet, dass** die Rohre (12, 13) perforierte Rohre sind und einen Ringkanal (14) bilden.

11. Vorrichtung nach Anspruch 8 bis 10, **dadurch gekennzeichnet, dass** der Fließraum (14) von kaskadenartigen Strömungsräumen (9) derart umgeben sind, dass die Prozessluft das Kunststoffgranulat (10) im Fließraum (14) mindestens zweimal durchfließen muss und die erste Kaskade ein höheres Temperaturniveau als die folgende Kaskade aufweist.

12. Vorrichtung nach Anspruch 8 bis 11, **dadurch gekennzeichnet, dass** der äußere Strömungsraum (9) ein koaxial zum Fließraum liegender Ringraum ist, der mindestens eine Barriere (8) für die Prozessluft in Achsrichtung aufweist.

13. Vorrichtung nach Anspruch 8 bis 12, **dadurch gekennzeichnet, dass** die in Kaskaden (9) angeordneten Strömungsräume koaxial zum Fließraum (14) liegende Ringräume sind, die zur Beeinflussung der Prozessluftgeschwindigkeit und des Strömungswiderstandes der Prozessluft in ihrer Größe variabel ausgelegt sind.

14. Vorrichtung nach Anspruch 8 bis 13 **dadurch gekennzeichnet, dass** die äußeren Strömungsräume von einem Mantel (11) umgeben sind.

15. Vorrichtung nach Anspruch 8 bis 14 **dadurch gekennzeichnet, dass** der letzte Strömungsraum wenigstens mit einem Prozessluftaustritt (4) versehen ist und dort damit das Temperaturniveau am niedrigsten ist,

16. Vorrichtung nach einem der Ansprüche 8 bis 15 **dadurch gekennzeichnet, dass** in das Innenrohr (12) mindestens ein Prozesslufteinlass (3) für die Heißluft mündet.

17. Vorrichtung nach Ansprüche 8 bis 16 **dadurch gekennzeichnet, dass** die Heizung innerhalb oder außerhalb der Heizeinrichtung liegt.

18. Vorrichtung nach Ansprüche 8 bis 17 **dadurch gekennzeichnet, dass** die Heizeinrichtung möglichst nahe an der Plastifizierung sitzt, bevorzugt mit einem Abstand von 1 bis 50 cm.

## Claims

1. Method for heating and/or drying plastic granulate (10), in which the plastic granulate (10) is conveyed to a processing unit that performs plasticization, wherein process air for introducing heat energy is not introduced into the plastic granulate flow in direct counterflow, but rather the process air is introduced in its hottest state specifically for rapid energy input at the material outlet (2) of a booster hopper (11) for rapid energy input, and then flows through the plastic granulates (10) at least twice through cascades (9) and preferably variable-width ring channels (14), whereby the resistance of the continuously flowing process air in each cascade (9) can be influenced by design, thereby influencing the total flow and velocity of the process air, whereby at least one process air inlet (3) opens into the first flow chamber, and thus the temperature level is highest there.

2. Method according to claim 1, **characterized in that** the hot process air is conducted in a closed circuit.

3. Method according to claims 1 and 2, **characterized in that** the hot process air is heated before flowing through the plastic granulate (10).

4. Method according to claims 1 to 3, **characterized in that** each time the hot process air flows through the plastic granulate (10) several times, heat energy is released and the process air cools down accordingly.

5. Method according to claims 1 to 4, **characterized in that** the heating process takes place immediately before the plastic granulate (10) is further processed in a plasticizing stage.

6. Method according to claims 1 to 5, **characterized in that** only the plastic granulate (10) that is directly prior to processing, in particular 20-33% of the hopper volume, is fed with the inflowing hot process air, and thus temperatures that are unusual for the process can be used, preferably 220°C.

7. Device for heating and drying plastic granulate (10), for carrying out the method according to claim 1, with at least one heater, wherein a heating device has at least one flow chamber (14) for the plastic granulate (10), which is not in direct counterflow to the process air flow, and this process air flow flows through the plastic granulate (10) at least twice to release heat energy through cascades (9), wherein the cascades (9) preferably have individual lengths and preferably ring channel chambers (9) for influencing the flow resistance of the process air, and thus, due to the high flow velocity and short dwell time in the first cascade, higher temperatures are preferably used, in particular 220 °C, without the plastic granulate (10) being damaged, wherein at least one process air inlet (3) opens into the first flow chamber, and thus the temperature level is highest there.

8. Device according to claim 7, with at least one heater, **characterized in that** the flow chamber (14) is bounded by at least one perforated outer jacket (13) which has at least one passage opening for the process air.

9. Device according to claims 7 to 8, **characterized in that** the flow chamber (14) is bounded by two coaxial pipes (12, 13), at least one pipe, preferably both pipes, having at least one passage opening for the process air.

10. Device according to claim 9, **characterized in that** the tubes (12, 13) are perforated tubes and form a ring channel (14).

11. Device according to claims 8 to 10, **characterized in that** the flow chamber (14) is surrounded by cascade-like flow chambers (9) in such a way that the process air must flow through the plastic granulate (10) in the flow chamber (14) at least twice and the first cascade has a higher temperature level than the following cascade.

12. Device according to claims 8 to 11, **characterized in that** the outer flow chamber (9) is an annular chamber coaxial with the flow chamber, which has at least one barrier (8) for the process air in the axial direction.

13. Device according to claims 8 to 12, **characterized in that** the flow chambers arranged in cascades (9) are annular chambers coaxial with the flow chamber (14), which are designed to be variable in size in order to influence the process air velocity and the flow resistance of the process air.

14. Device according to claims 8 to 13, **characterized in that** the outer flow chambers are surrounded by a jacket (11).

15. Device according to claims 8 to 14, **characterized in that** the last flow chamber is provided with at least one process air outlet (4) and the temperature level is lowest there.

16. Device according to one of claims 8 to 15, **characterized in that** at least one process air inlet (3) for the hot air opens into the inner tube (12).

17. Device according to claims 8 to 16, **characterized in that** the heater is located inside or outside the heating device.

18. Device according to claims 8 to 17, **characterized in that** the heating device is located as close as possible to the plasticizing device, preferably at a distance of 1 to 50 cm.

## Revendications

1. Procédé destiné à chauffer et/ou sécher des granulats de matière plastique (10), dans lequel les granulats de matière plastique (10) sont transportés à une unité de transformation, qui exécute une plastification, de l'air de traitement n'étant pas acheminé dans le contre-flux direct dans le flux de granulats de matière plastique pour introduire de l'énergie thermique, l'air de traitement étant acheminé dans son état encore le plus chaud sur la sortie de matériau (2) d'une trémie booster (11) de manière ciblée pour l'apport rapide en énergie puis les granulats de matière plastique (10) traversant au moins à deux reprises des cascades (9) à configuration variable dans la longueur et des canaux annulaires (14) de manière préférée à configuration variable dans leur largeur, la résistance de l'air de traitement s'écoulant en continu pouvant être influencée de manière constructive dans chaque cascade (9) et le flux total et la vitesse de l'air de traitement étant ainsi influencés, au moins une entrée (3) d'air de traitement débouchant dans le premier espace d'écoulement et la température y étant ainsi à son niveau le plus haut.

2. Procédé selon la revendication 1, **caractérisé en ce que** l'air de traitement très chaud est acheminé dans un circuit fermé.

3. Procédé selon la revendication 1 et 2, **caractérisé en ce que** l'air de traitement très chaud est réchauffé avant de traverser les granulats de matière plastique (10) .

4. Procédé selon les revendications 1 à 3, **caractérisé en ce que**, lorsque l'air de traitement très chaud traverse les granulats de matière plastique (10) à plusieurs reprises, de l'énergie thermique est distribuée à chaque reprise et l'air de traitement subit un refroidissement correspondant.

5. Procédé selon la revendication 1 à 4, **caractérisé en ce que** le procédé de réchauffage a lieu directement avant la transformation ultérieure des granulats de matière plastique (10) dans une plastification.

6. Procédé selon la revendication 1 à 5, **caractérisé en ce que** seuls les granulats de matière plastique (10) se trouvant directement avant la transformation, en particulier 20 - 33 % du volume de trémie sont chargés avec l'air de traitement très chaud affluant, ce qui peut donner lieu à des températures de traitement de manière préférée inhabituelles, de manière préférée de 220 °C.

7. Dispositif destiné à réchauffer et à sécher des granulats de matière plastique (10) pour mettre en œuvre le procédé selon la revendication 1, avec au moins un chauffage, un système de chauffage comportant au moins un espace d'écoulement (14) pour les granulats de matière plastique (10) qui ne se trouve pas dans le contre-flux direct par rapport au flux d'air de traitement et ledit flux d'air de traitement traversant les granulats de matière plastique (10) au moins à deux reprises pour distribuer de l'énergie thermique à travers des cascades (9), les cascades (9) présentant de manière préférée des longueurs individuelles et de manière préférée des chambres (9) de canal annulaire pour influencer la résistance d'écoulement de l'air de traitement, ce qui donne lieu ainsi du fait de la vitesse d'écoulement élevée et du court temps de séjour dans la première cascade de manière préférée à des températures plus élevées, en particulier de 220 °C sans causer des dommages aux granulats de matière plastique (10), au moins une entrée (3) d'air de traitement débouchant dans le premier espace d'écoulement et la température y étant ainsi à son niveau le plus haut.

8. Dispositif selon la revendication 7, avec au moins un chauffage, **caractérisé en ce que** l'espace d'écoulement (14) est délimité par au moins une enveloppe extérieure (13) perforée, qui comporte au moins une ouverture de passage pour l'air de traitement.

9. Dispositif selon la revendication 7 à 8, **caractérisé en ce que** l'espace d'écoulement (14) est délimité par deux tuyaux (12, 13) coaxiaux, dont au moins un tuyau, de préférence les deux tuyaux, comporte au moins une ouverture de passage pour l'air de traitement.

10. Dispositif selon la revendication 9, **caractérisé en ce que** les tuyaux (12, 13) sont des tuyaux perforés et forment un canal annulaire (14).

11. Dispositif selon la revendication 8 à 10, **caractérisé en ce que** l'espace d'écoulement (14) est entouré d'espaces d'écoulement (9) de type cascade de telle manière que l'air de traitement doit traverser au moins à deux reprises les granulats de matière plastique (10) dans l'espace d'écoulement (14) et la première cascade présente un niveau de température plus élevé que la cascade suivante.

12. Dispositif selon la revendication 8 à 11, **caractérisé en ce que** l'espace d'écoulement (9) extérieur est un espace annulaire situé de manière coaxiale par rapport à l'espace d'écoulement, qui comporte au moins une barrière (8) pour l'air de traitement dans la direction axiale.

13. Dispositif selon la revendication 8 à 12, **caractérisé en ce que** les espaces d'écoulement disposés en cascades (9) sont des espaces annulaires situés de manière coaxiale par rapport à l'espace d'écoulement (14) qui sont conçus avec une taille variable pour influencer la vitesse d'air de traitement et la résistance d'écoulement de l'air de traitement.

14. Dispositif selon la revendication 8 à 13, **caractérisé en ce que** les espaces d'écoulement extérieurs sont entourés par une enveloppe (11).

15. Dispositif selon la revendication 8 à 14, **caractérisé en ce que** le dernier espace d'écoulement est pourvu au moins d'une sortie (4) d'air de traitement et ainsi la température y est à son niveau le plus bas.

16. Dispositif selon l'une des revendications 8 à 15, **caractérisé en ce qu'**au moins une entrée (3) d'air de traitement pour l'air très chaud débouche dans le tuyau intérieur (12).

17. Dispositif selon les revendications 8 à 16, **caractérisé en ce que** le chauffage se situe à l'intérieur ou à l'extérieur du système de chauffage.

18. Dispositif selon les revendications 8 à 17, **caractérisé en ce que** le système de chauffage est le plus proche possible de la plastification, de manière préférée à une distance de 1 à 50 cm.
